# EUROPEAN PATENT SPECIFICATION

(11) **EP 2 282 400 B1**
(45) Date of publication and mention of the grant of the patent: **27.09.2017**
(21) Application number: 10171725.4
(22) Date of filing: 03.08.2010
(51) Int. Cl.: H02P 7/03

(54) **Motor driving system**
Motorantriebssystem
Système de commande de moteur

(30) Priority: 06.08.2009 JP 2009183864
(43) Date of publication of application: 09.02.2011
(73) Proprietor: Honda Motor Co., Ltd., Tokyo 107-8556 (JP)
(72) Inventor: Sakaguchi, Kazuhiko, Saitama 351-0193 (JP)
(74) Representative: Beder, Jens

(56) References cited:
- EP-A2- 2 034 220
- JP-A- 6 078 590
- JP-A- 2007 024 240
- JP-A- 2008 004 496

## Description

The present invention relates to a motor driving system and, more particularly, to a motor driving system capable of switching the direction of rotation (normal and reverse) of a motor by means of an H-bridge circuit.

There are known motor driving systems designed to switch the direction of rotation (normal and reverse) of a dc motor by means an H-bridge circuit. An example is disclosed in Japanese Patent No. 3398784, for instance. It has an H-bridge circuit composed of four driving transistors (MOSFET). The circuit is connected to a dc motor (as a load) at its intermediate point. The first and second driving transistors are turned on and off by a first controller, and the third and fourth driving transistors are turned on and off by a second controller. The H-bridge circuit constructed as mentioned above is able to control the difference in the number of revolutions which varies depending on the direction of rotation of the motor.

The four driving transistors (MOSFET) constituting the H-bridge circuit should preferably be ones which have a small internal loss (or a small on-state resistance, which will be referred to as "internal resistance" hereinafter), so that a motor current generates as small an amount of heat as possible. Such H-bridge is disclosed in JP-6-078590 A (JAPAN RADIO CO LTD) published 18 March 1994. Unfortunately, driving transistors with a small internal resistance is usually expensive. By contrast, driving transistors with a large internal resistance are cheap and acceptable if they are provided with a heat dissipation means which is large in size.

It is an object of the present invention to provide a motor driving system which is an H-bridge circuit constructed of switching transistors having a large internal resistance.

The motor driving system according to the present invention, is applicable to any mechanical device that puts different load on the dc motor depending on the direction of rotation owing to an energizing means attached thereto. The motor driving system has an H-bridge circuit whose switching elements vary in internal resistance depending on the direction of rotation in response to the required current for the dc motor. The H-bridge circuit with a large internal resistance can be constructed of inexpensive switching elements.

The motor driving system, which has the second characteristic feature, offers an advantage that the switching elements with a large internal resistance generate only a small amount of heat because they are placed in the line through which a small required current flows. This leads to size reduction of the heat radiating structure and size reduction of the entire motor driving system.

The motor driving system, which has the third characteristic feature, offers an advantage that the H-bridge circuit can be constructed of FETs as switching elements.

The motor driving system, which has the fourth characteristic feature, offers an advantage that the required current for the dc motor decreases when the speed is shifted toward the direction in which the return spring acts, because the driven pulley is provided with a return spring as an energizing means that reduces the pulley distance. This permits the H-bridge circuit to be constructed of inexpensive switching elements with a small internal resistance for cost saving while limiting heat generation.

The motor driving system, which has the fifth characteristic feature, offers an advantage that it does not need any force opposite to the action of the return spring when the speed change ratio is shifted down to low. The result is a smaller required current and a less amount of heat generation from the switching elements. This permits the H-bridge circuit to be constructed of inexpensive switching elements with a small internal resistance for cost saving.

The motor driving system, which has the sixth characteristic feature, offers an advantage that the movable sheave of the driven pulley comes close to the fixed sheave as the dc motor moves the movable sheave of the driving pulley away from the fixed sheave when the speed change ratio is shifted down to low.

The motor driving system, which has the seventh characteristic feature, offers an advantage that it can be used to drive an apparatus having a valve return spring as a constituent. This contributes to cost saving and size reduction.

Fig. 1 is a wiring diagram of a motor driving system pertaining to one embodiment of the present invention.
Fig. 2 is a left side view of a motorcycle of scooter type which is provided with a continuously variable transmission containing the motor driving system pertaining to one embodiment of the present invention.
Fig. 3 is a sectional view showing a driving part of a continuously variable transmission of a motorcycle.
Fig. 4 is a sectional view showing the driven part of the continuously variable transmission of a motorcycle.
Fig. 5 is a diagram showing the change with time of the number of engine revolutions and the vehicle speed.
Fig. 6 is a diagram showing the relationship between the position of the pulley and the driving duty of the dc motor which was observed when the speed was shifted up to top or shifted down to low.

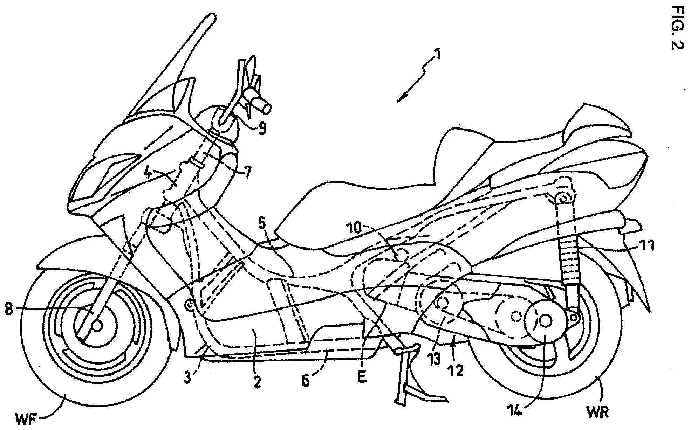

One embodiment of the present invention will be described below with reference to accompanying drawings. Fig. 2 is a left side view of a motorcycle of scooter type which is provided with a continuously variable transmission containing a motor driving system pertaining to one embodiment of the present invention. A motorcycle 1 shown in Fig. 2 has a cowling 2 and a body frame 3 covered thereunder. The body frame 3 is composed of a main frame 5 and a lower frame 6. The main frame 5 joins to a head pipe 4 at its foreend and extends rearward. The lower frame 6 joins to the head pipe 4 at its foreend and extends downward and rearward under the main frame 5.

The head pipe 4 holds a steering shaft 7 penetrating through it vertically. The steering shaft 7 joins, at its lower part, to a front fork 8 that pivotally supports a front wheel WF. The steering shaft 7 also joins, at its upper part, to a steering handlebar 9 that extends upward.

The motorcycle 1 has a swing unit 12, which joins, at its front part, to a pivot 10 placed at the central part of the main frame 5, and is supported, at its rear part, by a rear cushion 11 placed at the rear end of the main frame 5. The swing unit 12 holds in its front part an engine E, a continuously variable transmission 13, and a reduction gear 14 that reduces a speed of rotation of a continuously variable transmission 13. A reduction gear 14 has an output shaft (mentioned later) that supports a rear wheel WR. The engine E is held substantially horizontally relative to a cylinder axis line.

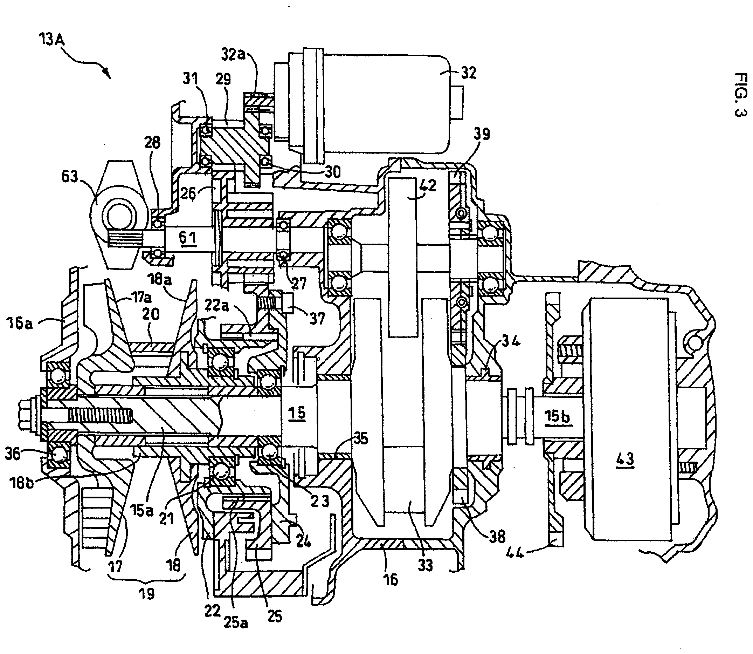

The continuously variable transmission 13 is constructed as explained below. It has a driving part 13A whose sectional view is shown in Fig. 3. The driving part 13A of the continuously variable transmission 13 has a driving pulley 19 which is attached to that part 15a of a crank shaft 15 of the engine E which projects from a crank case 16. The part 15a will be referred to as "transmission input shaft" hereinafter. The direction of projection is leftward in the drawing and it also coincides with the left side of the body. The driving pulley 19 consists of a driving fixed sheave 17 and a driven movable sheave 18, the former engaging by spline coaxially with the transmission input shaft 15a and the latter being movable in axial direction with respect to the transmission input shaft 15a so as to be able to change the distance between the former and itself and being rotatable together with the transmission input shaft 15a.

The driving fixed sheave 17 and the driving movable sheave 18 have respectively a conical surfaces 17a and 18a which face each other and contact with a belt. The driving movable sheave 18 is moved in the axial direction by a driving mechanism (mentioned later) for adjustment of the pulley width or the distance in the axial direction between the surfaces 17a and 18a that contact with the belt. Across the driving pulley 19 and a driven pulley (mentioned later) is hung an endless V-belt 20.

The driving movable sheave 18 has a hub 18b, which is held by a bearing 21 slipped thereon, and the bearing 21 has a circular movable sheave driving member 22 slipped thereon, which is not rotatable but is movable together with the bearing 21 in the axial direction of the transmission input shaft 15a. The movable sheave driving member 22 has a male thread 22a formed on the periphery thereof.

The transmission input shaft 15a has a bearing 23 slipped thereon at the place close to the crank case 16, and the bearing 23 has a gear supporting disk 24 slipped on the periphery thereof.

The gear supporting disk 24 has a gear 25 fixed to the side thereof (which is the left side in Fig. 3) by a bolt 37. The gear 25 is a circular one which has spur teeth formed on the periphery thereof and also has (on the internal circumference thereof) a female screw 25a which is screwed to a male screw 22a.

The transmission 13 has the first intermediate gear 26 which is rotatably supported by bearings 27 and 28 and also has a second intermediate gear 29 which is supported by bearings 30 and 31. Each of the first and second intermediate gears 26 and 29 has a gear part large in diameter and a part small in diameter. To the transmission 13 is fixed a dc motor 32 in such a way that the large part of the second intermediate gear 29 meshes with an output gear 32a fixed to the output shaft of the dc motor 32. These gears constitute the gear train such that the small part of the second intermediate gear 29 meshes with the large part of the first intermediate gear 26 and the small part of the first intermediate gear 26 meshes with the peripheral teeth of the gear 25.

A shaft (gear shaft) 61 of the first intermediate gear 26 has a position sensor 63 attached to the foreend thereof, which detects the rotational position of the first intermediate gear 26. The position sensor 63 detects the amount of rotation of the first intermediate gear 26 which represents the displacement of the driving movable sheave 18a (or the pulley position).

The crank shaft 15 has a crank 33 connected to the piston and conrod (both not shown) which reciprocate in a cylinder, and it is supported in the crank case 16 by bearings 34 and 35 positioned at both sides of the crank 33. The foreend of the transmission input shaft 15a is supported in a transmission case cover 16a by a bearing 36. The crank 33 has a driving gear 38 attached to the right side thereof. The driving gear 38 meshes with a driven gear 39, which is connected to a balancer 42 supported by bearings 40 and 41 at its ends.

The crank shaft 15 has a part 15b projecting rightward from the crank case 16. The projecting part 15b is connected to an alternator 43. A starter gear 44 is mounted on the projecting part 15b between the alternator 43 and the crank case 16.

When the dc motor 32 is set going by the motor driving circuit (mentioned later) while the engine is running, its rotation is reduced by the output gear 32a, the second intermediate gear 29, and the first intermediate gear 26, and transmitted to the gear 25. Thus the gear 25 begins to rotate to rotate the male screw 22a of the driving movable sheave 18 which is screwed to the female screw 25a of the gear 25. As the result, the driving movable sheave 18 is moved by screwing in the axial direction of the transmission input shaft 15a in response to the direction of rotation of the dc motor 32.

As a consequence of this action, the pulley width changes which is the distance between the belt contacting face 17a of the driving fixed sheave 17 and the belt contacting face 18a of the driving movable sheave 18. In other words, it is possible to adjust the width of the driving pulley 19 by controlling the rotation of the dc motor 32.

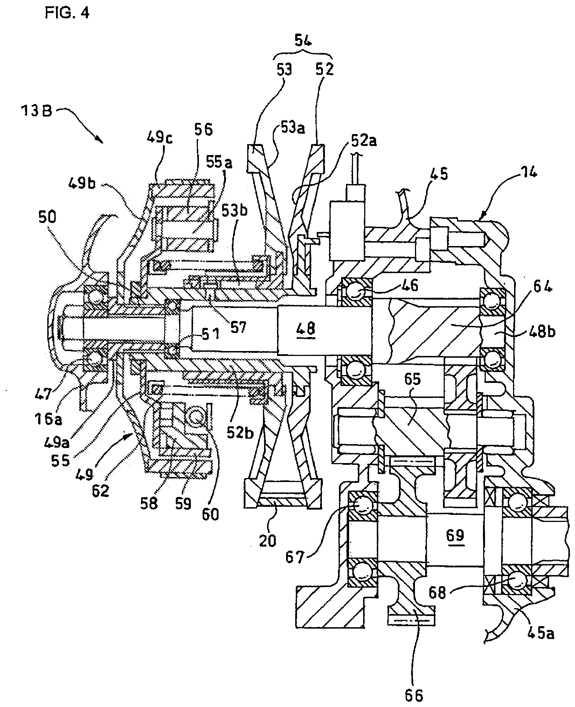

A driven part 13B of the continuously variable transmission 13 in cross section is shown in Fig. 4. It has a driven shaft 48 which is rotatably supported by a bearing 46 and a bearing 47, the former being fixed to the reduction gear case 45 and the latter being fixed to the transmission case cover 16a. The driven shaft 48 has a clutch outer 49 at its left end or on the periphery of the end close to the bearing 47. The clutch outer 49 consists of a hub 49a (connected to the driven shaft 48 by spline), a disk 49b (connected to the hub 49a), and a drum 49c (connected to the disk 49b). The driven shaft 48 also has a driven fixed sheave 52 which is coaxially rotatable around the driven shaft 48 and is supported by a bearing 50 (preferably a needle bearing) and a bearing 51, the former being arranged around the periphery of the hub 49a of the clutch outer 49 and the latter being fit around the periphery of the driven shaft 48. The driven fixed sheave 52 has the hub 52b on the periphery of which is mounted the driven movable sheave 53 which is slidable in the axial direction. Thus the driven fixed sheave 52 and the driven movable sheave 53 constitute the driven pulley 54.

The hub 52b of the driven fixed sheave 52 has a connecting pin 57 projecting outward, which engages with a long hole 53b (extending in the axial direction of the driven shaft 48) which is formed in a hub 53a of the driven movable sheave 53.

Thus the driven movable sheave 53 is movable in the axial direction of the driven shaft 48 and it is connected to the driven shaft 48 in such a way that it rotates together with the driven fixed sheave 52. The driven fixed sheave 52 and the driven movable sheave 53 have respectively the conical surfaces 52a and 53a which face each other and contact with the belt. The driven movable sheave 53 moves in the axial direction for adjustment of the pulley width or the distance in the axial direction between the surfaces 52a and 53a that contact with the belt.

The hub 52a of the driven fixed sheave 52 has a discoid clutch supporting plate 55 which is fixed at the left of the hub 52a coaxially with the driven shaft 48. The clutch supporting plate 55 has a shaft 55a extending therefrom, and the shaft 55a rotatably supports one end of a clutch 56 around it. The clutch 56 has a centrifugal weight 58 and a clutch shoe (or friction material) 59 at the other end thereof. The clutch shoe 59 is connected to the centrifugal weight 58 and is so arranged as to face the internal surface of a drum 49c of the clutch outer 49. The clutch 56 has a clutch spring 60 which counteracts the centrifugal force generated by the rotation of the driven pulley 54, the centrifugal force causing the clutch 56 to expand toward the drum 49c.

Between the side of the clutch supporting plate 55 and the side of the driven movable sheave 53 is a pulley energizing spring (return spring) 62, which energizes the driven movable sheave 53 toward the driven fixed sheave 52.

The driven shaft 48 has a first gear 64 connected to that part 48b (reducing input shaft) which projects rightward (in the drawing) from a bearing 46. The first gear 64 meshes with an idle gear 65, which in turn meshes with an output gear 66. The output gear 66 is connected to a reduced output shaft 69, which is supported by bearings 67 and 68 attached respectively to a reduction gear case 45 and a reduction gear cover 45a. The reduced output shaft 69 is connected to the rear wheel WR mentioned above.

During operation, the rotation of the engine E is transmitted to the driving pulley 19 and the rotation of the driving pulley 19 is transmitted to the driven pulley 54 by the V-belt 20, so that the clutch supporting plate 55 rotates. As the clutch supporting plate 55 increases in rotating speed, its rotation generates more centrifugal force to such an extent that the centrifugal force overcomes the energizing force of the clutch spring 60, thereby causing the clutch 56 to shift toward the internal periphery of the drum 49c. When a prescribed clutch connecting speed is reached, the clutch shoe 59 is pressed against the internal periphery of the drum 49c, so that the rotation of the driven pulley 54 is transmitted to the clutch outer 49. In this way the driven shaft 48 rotates and the reduced output shaft 69 rotates.

The gear ratio of the continuously variable transmission 13 is adjusted by the ratio between the diameter of the driving pulley 19 and the diameter of the driven pulley 54 around which the V-belt 20 is wound. At the time of engine starting, the driving pulley 19 has the maximum pulley width and hence has the minimum diameter of the circumference around which the V-belt 20 is wound. In this state, the V-belt 20 has a small tension and the driven movable sheave 53 is kept closest to the driven fixed sheave 52 by the return spring 62; therefore, the driven pulley 54 has the minimum pulley width and also has the maximum diameter of the circumference around which the V-belt 20 is wound.

As the throttle valve (not shown) is opened, with the engine running, the transmission shifts the speed toward the top side (this action will be referred to as "shift up" hereinafter) in the following manner. That is, the opening of the throttle vale causes the dc motor 32 to rotate in the normal direction, thereby reducing the distance (pulley width) between the driving fixed sheave 17 and the driving movable sheave 18. This results in a gradual increase in the diameter of the circumference of the driving pulley 19 around which the V-belt 20 is wound. As a consequence, the V-belt 20 increases in tension and exerts a wedge force on the driven pulley 54 so that the driven movable sheave 53 moves away from the driven fixed sheave 52 against the energizing force of the return spring 62. This results in a decrease in diameter of the circumference of the driven pulley 54 around which the V-belt 20 is wound. In this way the dc motor 32 rotates in the normal direction to reduce the gear ratio for shift up in response to the increasing engine speed.

Conversely, as the throttle valve is closed, the transmission shifts the speed toward the low side (this action will be referred to as "shift down" hereinafter) by increasing the gear ratio in the following manner. That is, the closing of the throttle vale causes the dc motor 32 to rotate in the reverse direction, thereby increasing the distance (pulley width) between the driving fixed sheave 17 and the driving movable sheave 18. This results in a gradual decrease in the diameter of the circumference of the driving pulley 19 around which the V-belt 20 is wound. As a consequence, the V-belt 20 decreases in tension and the driven movable sheave 53 comes close to the driven fixed sheave 52 due to the energizing force of the return spring 62. This results in an increase in diameter of the circumference of the driven pulley 54 around which the V-belt 20 is wound. In this way the dc motor 32 rotates in the reverse direction to increase the gear ratio for shift down in response to the decreasing engine speed.

Since the driven pulley 54 is provided with the return spring 62 as mentioned above, it needs a larger force when it increases its width (for shift up) than it needs when it decreases its width (for shift down). Conversely, decreasing the pulley width for shift down requires a smaller force than increasing the pulley width for shift up.

In the case of the driving pulley 19, decreasing the pulley width for shift up requires a larger force than increasing the pulley width for shift down, and conversely, increasing the pulley width for shift down requires a smaller force than decreasing the pulley width for shift up.

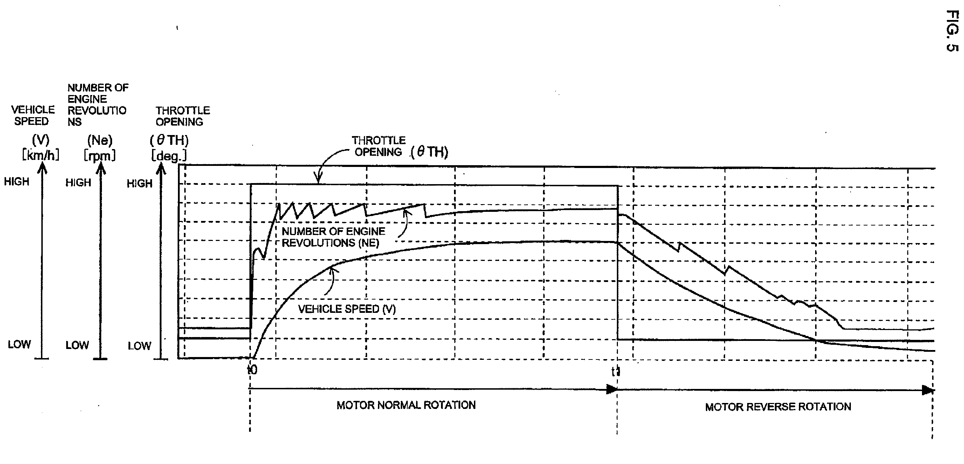

Fig. 5 is a diagram showing a change with time of the number of engine revolutions (Ne) and the vehicle speed (V) in the case of the motorcycle 1. The abscissa represents time and the ordinate represents the number of engine revolutions (Ne in rpm) and the vehicle speed (V in km/h). Time (t0) plotted on the abscissa in Fig. 5 denotes the instance at which the throttle valve for the engine E is opened. With the lapse of time, the number of engine revolutions (Ne) gradually increases and the vehicle speed (V) also increases. After the throttle valve is closed at time (t1), both the number of engine revolutions (Ne) and the vehicle speed (V) gradually decrease.

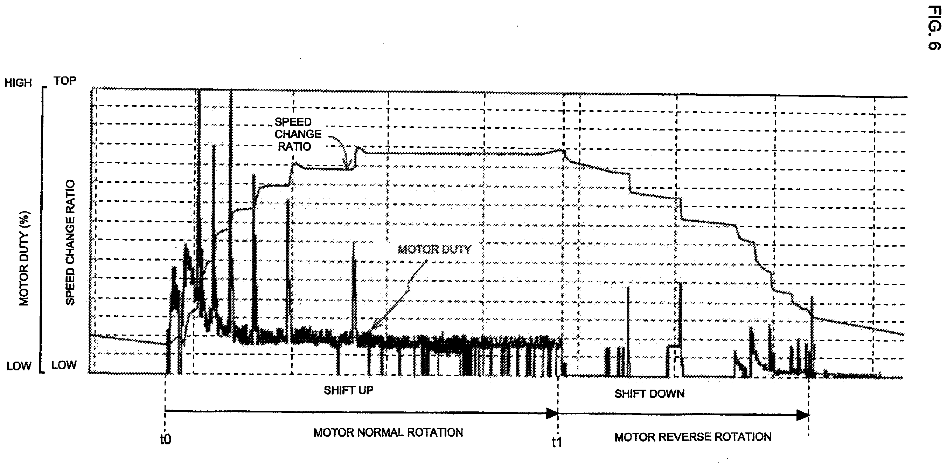

Fig. 6 is a diagram showing the relationship between the position of the pulley (or the position of the driving movable sheave 18) and the driving duty of the dc motor 32 which was observed when the continuously variable transmission 13 was shifted up or shifted down.

Plots for time at t0 and t1 in Fig. 6 correspond to those at t0 and t1 in Fig. 5. The pulley position is indicated by the output voltage from the position sensor 63. When the throttle valve is opened at time (t0), the dc motor 32 is activated for shift up. The direction of rotation of the dc motor 32 for shift up is defined as the normal direction. The motor duty is high immediately after the start of shift up, but it decreases with the lapse of time. When the throttle valve is closed at time (t1), the dc motor 32 rotates in the reverse direction. Thus the driving pulley 19 is actuated in such a way that the driving movable sheave 18 moves away from the driving fixed sheave 17, thereby increasing the pulley width, and driven pulley 54 is actuated in such a way that the pulley width is decreased by the action of the return spring 62 for shift down. Referring to Fig. 6, it is to be understood that the motor duty is smaller at the time of shift down than at the time of shift up. In other words, the required current is smaller for shift down than for shift up.

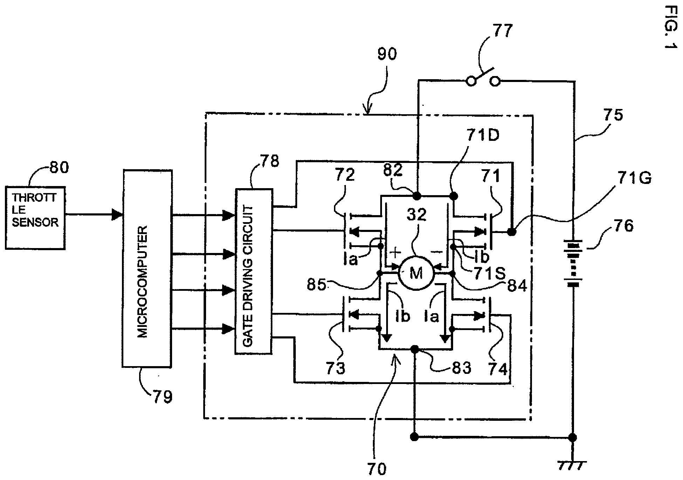

For the reasons mentioned above, the motor driving system of the dc motor 32 according to the present invention is constructed such that the driving circuit for the dc motor meets requirements for the foregoing characteristic properties of the continuously variable transition 13 (that is, the required current for shift up is larger than that for shift down). Fig. 1 shows the driving system (circuit) for the dc motor 32. An H-bridge circuit 70 of a driving system 90 is composed of the dc motor 32 and switching elements (such as MOSFET) 71 to 74. One pair of the switching elements 71 and 73 and the other pair of the switching elements 72 and 74 are arranged diagonally, with the dc motor 32 placed at the center. The H-bridge circuit 70 is supplied with voltage from a battery 76 through a power supply line 75 which has a switch 77. In other words, the H-bridge circuit 70 is constructed such that the switching elements 71 and 74 are connected in series and the switching elements 72 and 73 are connected in series, and the former set and the latter set are connected in parallel. A connection 82 of the switching elements 71 and 72 is connected to a positive terminal of the battery 76, and a connection 83 of the switching elements 73 and 74 is connected to a negative terminal of the battery 76. The dc motor 32 is connected to both the connection 84 of the switching elements 71 and 74 and the connection 85 of the switching elements 72 and 73. In the case of the switching element 71, for example, the on-state resistance is determined by current that flows when a gate 71G is turned on and a prescribed voltage is applied across a source 71S and a drain 71D.

Each gate of the switching elements 71 to 74 receives gate signals from a gate driving circuit 78. A microcomputer (CPU) 79 judges whether shift up or shift down is necessary according to the increase or decrease of a throttle opening TH which is detected by a throttle sensor 80. The result of judgment is used by the microcomputer 79 to select the set of the switching elements 71 and 73 or the set of the switching elements 72 and 74 and send gate signals to the selected set of the switching elements.

For example, the microcomputer 79 sends gate signals to the switching elements 72 and 74 but no gate signals to the switching elements 71 and 73 at the time of shift up. In this state, a current Ia flows from the positive terminal to the negative terminal of the battery 76 through the power supply line 75, the switching element 72, the dc motor 32, and the switching element 74, thereby causing the dc motor 32 to rotate in the normal direction.

The gate signals are turned on and off repeatedly within a sufficiently short time compared with the rotational response time of the dc motor 32. This controls the ratio of on time to off time (or the drive duty), thereby controlling the value of current Ia.

By contrast, the microcomputer 79 sends gate signals to the switching elements 71 and 73 but no gate signals to the switching elements 72 and 74 at the time of shift down. In this state, the current Ib flows from the positive terminal to the negative terminal of the battery 76 through the power supply line 75, the switching element 71, the dc motor 32, and the switching element 73, thereby causing the dc motor 32 to rotate in the reverse direction.

As in the case of normal rotation, the gate signals are turned on and off repeatedly within a sufficiently short time compared with the rotational response time of the dc motor 32. This controls the ratio of on time to off time (or the drive duty), thereby controlling the value of current Ib.

The continuously variable transmission 13 has the characteristic property that the required current for shift down is smaller than that for shift up. Consequently, the switching elements 71 and 73 through which the current Ib flows for shift down should have a larger internal resistance than the switching elements 72 and 74 through which the current Ia flows for shift up. This requirement is met by using MOSFETs with a larger internal resistance for the switching elements 71 and 73 and using MOSFETs with a smaller internal resistance for the switching elements 72 and 74. The MOSFETs with a larger internal resistance do not pose problems with heat generation because the current Ib that flows through the switching elements 71 and 73 is smaller than the current Ia that flows through the switching elements 72 and 74.

The advantage of the foregoing embodiment is that the H-bridge circuit 70 can be constructed with comparatively cheap switching elements without any large heat radiator. This leads to cost reduction and size reduction of the motor driving system 90 (containing the H-bridge circuit 70) for the continuously variable transmission 13 including the H-bridge circuit 70.

The foregoing embodiment was described with reference to the motor driving system 90 for the continuously variable transmission 13 of the motorcycle 1. However, it is not intended to restrict the scope of the present invention. The point is that the present invention can be applied to any system having an H-bridge circuit that incorporates a dc motor therein, the system being designed to drive a driven member in mutually opposite directions and being constructed such that the required current for driving in one direction is smaller than that for driving in the opposite direction on account of a return spring attached to the system. Examples of the system having a return spring include a throttle value driving system of TBW type (Throttle By Wire) and a driving system for an exhaust control value attached to an exhaust pipe. They are driven by a dc motor and are provided with a return spring which energizes the throttle valve or the exhaust control valve in either the normal direction or the reverse direction. Another example is a power window unit for vehicles. In this case, a current flowing through a dc motor varies depending on whether or not a motor rotates in the same direction as the gravitational force. It is possible to employ switching elements with a large internal resistance to rotate the dc motor in the same direction as the gravitational force.
1 ... Motorcycle,
12 ... Swing unit,
13 ... Continuously variable transmission,
15 ... Crank shaft,
15a ... Input shaft of transmission,
17 ... Driving fixed sheave,
18 ... Driving movable sheave,
19 ... Driving pulley,
20 ... V-belt,
32 ... DC motor,
48 ... Driven shaft,
49 ... Clutch outer,
52 ... Driven fixed sheave,
53 ... Driven movable sheave,
54 ... Driven pulley,
62 ... Return spring (energizing means),
70 ... H-bridge circuit,
71 and 73 ... Switching elements for normal rotation,
72 and 74 ... Switching elements for reverse rotation,
90 ... Motor driving system.

## Claims

1. A motor driving system (90) for a driven unit which is constructed such that a required current varies as a direction of rotation of a dc motor (32) is switched from normal rotation to reverse rotation or vice versa on account of energizing means (62) that applies a force in the direction of normal rotation or reverse rotation of the dc motor (32),
said motor driving system
having an H-bridge circuit (70) which is composed of parallelly connected two sets of serially connected switching elements, each set consisting of two switching elements, with both ends (82, 83) of the parallel connection being connected to a power source and connections (84, 85) of the two serially connected switching elements being connected to each other through the dc motor (32), and
also having control means (78, 79) which selectively turn on and off the four switching elements (71, 72, 73, 74) of the two sets so as to switch the direction of rotation of the dc motor (32) from normal rotation to reverse rotation or vice versa,
one set of two switching elements which flows a current to rotate the dc motor (32) in the normal direction and the other set of two switching elements which flows a current to rotate the dc motor (32) in a reverse direction, **characterised in that** the two switching elements of a set are diagonally arranged with the dc motor (32) placed at the center and the two sets differ from each other in internal resistance depending on the required current flowing through them for normal rotation or reverse rotation.

## Patentansprüche

1. Motorantriebssystem (90) für eine angetriebene Einheit, die so konstruiert ist, dass ein geforderter Strom sich ändert, wenn eine Drehrichtung eines Gleichstrommotors (32) von einer normalen Drehrichtung zu einer Umkehrdrehung oder umgekehrt umgeschaltet wird, aufgrund von Energiezuführungsmitteln (62), die eine Kraft in der Richtung der normalen Drehung oder Umkehrdrehung des Gleichstrommotors (32) anwenden,
wobei das Motorantriebssystem einen H-Brückenschaltkreis (70) hat, der aus zwei parallel verbundenen Sätzen von seriell verbundenen Schaltelementen besteht, wobei jeder Satz aus zwei Schaltelementen besteht, und bei dem beide Enden (82, 83) der parallelen Verbindung mit einer Leistungsquelle verbunden sind und Verbindungen (84, 85) der beiden seriell verbundenen Schaltelemente miteinander durch den Gleichstrommotor (32) verbunden sind, und
auch Steuermittel (78, 79) hat, welche die vier Schaltelemente (71, 72, 73, 74) der beiden Sätze wahlweise an- und ausschalten, um die Richtung der Drehung des Gleichstrommotors (32) von einer normalen Rotation zu einer Umkehrrotation oder umgekehrt zu schalten,
wobei ein Satz der Schaltelemente, in dem ein Strom fließt, um den Gleichstrommotor (32) in der normalen Richtung zu drehen, und der andere Satz der Schaltelemente in dem ein Strom fließt, um den Gleichstrommotor (32) in Umkehrrichtung zu drehen ist, **dadurch gekennzeichnet, dass**
die beiden Schaltelemente eines Satzes diagonal angeordnet sind, mit dem Gleichstrommotor (32) in dem Zentrum platziert, und die beiden Sätze sich voneinander unterscheiden bezüglich ihres inneren Widerstands, der von dem erforderlichen Strom abhängt, der durch sie für normale Rotation und Umkehrrotation fließt.

## Revendications

1. Système d'entraînement de moteur (90) pour une unité entraînée qui est construite de sorte qu'un courant requis varie lorsqu'une direction de rotation d'un moteur CC (32) est commuté d'une rotation normale à une rotation inverse ou vice versa sous l'effet d'un moyen d'excitation (62) qui applique une force dans la direction de la rotation normale ou de la rotation inverse du moteur CC (32),
ledit système d'entraînement de moteur
ayant un circuit à pont en H (70) qui est composé de deux jeux connectés en parallèle d'éléments de commutation connectés en série, chaque jeu consistant en deux éléments de commutation, avec les deux extrémités (82, 83) de la connexion parallèle connectées à une source d'énergie et des connexions (84, 85) des deux éléments de commutation connectés en série connectés l'une à l'autre par le moteur CC (32), et
ayant également un moyen de commande (78, 79) qui allume et éteint sélectivement les quatre éléments de commutation (71, 72, 73, 74) des deux jeux de façon à faire commuter la direction de rotation du moteur CC (32) de la rotation normale à la rotation inverse ou vice versa,
un jeu de deux éléments de commutation qui fait circuler un courant pour mettre en rotation le moteur CC (32) dans la direction normale et l'autre jeu de deux éléments de commutation qui fait circuler un courant pour mettre en rotation le moteur CC (32) dans une direction inverse, **caractérisé en ce que** les deux éléments de commutation d'un jeu sont agencés en diagonale avec le moteur CC (32) placé au centre et les deux jeux diffèrent l'un de l'autre par leur résistance interne en fonction du courant requis qui y circule pour une rotation normale ou une rotation inverse.
